Europäisches Patentamt

European Patent Office

Office européen des brevets

(11) Veröffentlichungsnummer : **0 005 236**
**B1**

(12) **EUROPÄISCHE PATENTSCHRIFT**

(45) Veröffentlichungstag der Patentschrift :
02.12.81

(51) Int. Cl.³ : **G 03 B 23/02**

(21) Anmeldenummer : **79101248.7**

(22) Anmeldetag : **25.04.79**

(54) **Vorrichtung für den Diapositivtransport durch einen Projektor.**

(30) Priorität : **02.05.78 DE 2819187**

(43) Veröffentlichungstag der Anmeldung :
**14.11.79 (Patentblatt 79/23)**

(45) Bekanntmachung des Hinweises auf die Patenterteilung : **02.12.81 Patentblatt 81/48**

(84) Benannte Vertragsstaaten :
**CH FR GB IT SE**

(56) Entgegenhaltungen :
**AT - B - 274 425**
**DE - A - 1 772 121**
**DE - A - 2 539 597**
**DE - U - 1 871 396**

(73) Patentinhaber : **Götschmann, Ulrich**
**Ansbacher Strasse 3**
**D-8000 München 40 (DE)**

(72) Erfinder : **Götschmann, Ulrich**
**Ansbacher Strasse 3**
**D-8000 München 40 (DE)**

(74) Vertreter : **Strohschänk, Heinz, Dipl.-Ing.**
**Musäusstrasse 5**
**D-8000 München 60 (DE)**

Imprimerie Jouve, 17, rue du Louvre, 75001 Paris, France

Vorrichtung für den Diapositivtransport durch einen Projektor

Die Erfindung bezieht sich auf eine der Gattung des Patentanspruchs 1 entsprechende Vorrichtung für den Diapositivtransport durch einen Projektor.

Bei einer solchen bekannten, in einem handelsüblichen Projektor der Firma Max Braun, Frankfurt/Main mit der Typenbezeichnung « PA 2 » vorhandenen Vorrichtung dient für den Magazintransport ein am Boden des Magazinkanals um eine lotrechte Achse drehbar angeordnetes Zahnrad, welches mit einer unteren Verzahnung des eingeschobenen Magazins im Eingriff steht. Eine in der Bodenwandung des Magazinkanals gelagerte Achswelle dieses Zahnrades trägt unterhalb des Magazinkanals ein Klinkenrad, in welches eine Sperrklinke eingreifen kann, die sich an einer quer zum Magazinkanal verlaufenden Schubstange befindet, die von einem auf der Antriebswelle gelagerten Nocken her im Sinne eines Eingriffs der Klinke in das Klinkenrad und eine entsprechend schrittweise Drehung des Zahnrades entgegen einer Federkraft vorgeschoben werden kann und anschließend außerhalb des Hubbereiches des Nockens durch die Feder unter einer gleichzeitigen seitlichen Ausweichbewegung am Klinkenrad vorbei wieder zurückgeführt wird. Damit das Zahnrad nach jedem Drehschritt in seiner neuen Lage festgelegt bleibt, ist die einerseits an der Vorschubstange angreifende Feder anderseits am freien Ende eines Winkelhebels festgelegt, dessen anderes freies Ende eine nachgiebig in die Verzahnung des Zahnrades einrastende Sperrklinke trägt. Während jedes Drehschrittes des Zahnrades wird die Sperrklinke dann unter entsprechender zusätzlicher Dehnung der genannten Feder aus dem Zahnrad ausgerastet, um anschließend wieder in die nächste Zahnlücke einzurasten. Zum Antrieb des Hubfingers dient ein von der Antriebswelle abgeleiteter Kurbeltrieb. Damit der auf diese Weise an sich kraftschlüssig von unten gegen das anzuhebende Diapositiv geschwenkte Hubfinger im Falle einer unvorhergesehenen Hemmung keinen Schaden anrichten kann, greift die Kurbel des Kurbeltriebes an einem gesonderten, neben dem Hubfinger gelagerten Schwenkhebel an, an dessen freiem Ende ein Mitnehmerhebel über eine Drehfeder so gelagert ist, daß er normalerweise in etwa radialer Richtung hinter einen Mitnehmernocken des Hubfingers greift und den Hubfinger damit entsprechend den Kurbelbewegungen nachgiebig mitnimmt. Im Falle einer Hemmung kann der Hubfinger dann stehen bleiben, während der vom Kurbeltrieb her mitgenommene Mitnehmerhebel nachgiebig über einen äußeren Umfangsbereich des Mitnehmernockens des Hubfingers gleiten kann. Nachteilig ist die komplizierte und aufwendige Ausbildung dieser Transportvorrichtung für die Diapositive mit einer Vielzahl von Hebeln und lagerstellen.

Der Erfindung liegt die Aufgabe zugrunde, den einwandfreien, bei etwaigen Hemmungen jedoch ebenfalls nachgiebig wirksamen Diapositivtransport auf einfachere Weise zu ermöglichen.

Die gestellte Aufgabe ist, ausgehend von der im Oberbegriff des Patentanspruchs 1 wiedergegebenen Gattung erfindungsgemäß durch die in dessen Kennzeichen wiedergegebene Lehre gelöst.

Bei einer solchen einfachen Nockensteuerung des Hubfingers erübrigen sich für dessen Antrieb jegliche weiteren beweglichen Teile, weil der Hubfinger im Falle einer Hemmung des gerade anzuhebenden Diapositivs jederzeit nachgiebig von der Nockenscheibe des Nockentriebes abgehoben werden kann, Auch der Vorschubmechanismus für das Magazin fällt mit einem Zahnriementrieb od. dgl. außerordentlich einfach aus und ist doch zuverlässig wirksam.

Vorteilhafte, den Magazinvorschub betreffende konstruktive Ausgestaltungen der Erfindung sind in den Patentansprüchen 2 und 3 gekennzeichnet. Mit diesen Vorschlägen ist die einfache Möglichkeit gegeben, das Schaltrad aus der Bewegungsbahn des Magazins nach unten zu entfernen, so daß das Magazin beliebig verschoben oder aus dem Magazinkanal entnommen werden kann.

Andere, insbesondere eine zuverlässige Zentrierung des in seiner Projektionsstellung befindlichen Diapositivs betreffende vorteilhafte Ausgestaltungen der Erfindung sind in weiteren Unteransprüchen gekennzeichnet.

In der Zeichnung ist die Erfindung beispielsweise veranschaulicht ; es zeigen :

Fig. 1 eine mit der erfindungsgemäßen Transportvorrichtung versehenen Projektor in einem Querschnitt nach der Linie I-I der Fig. 2 (bei angehobenem Hubfinger) ;

Fig. 2 den Projektor gemäß Fig. 1 in einer schematisch gehaltenen Draufsicht (bei entfernter Deckwand des Projektorgehäuses) ;

Fig. 3 einen der Fig. 1 entsprechenden Querschnitt, jedoch bei abgesenktem Hubfinger ;

Fig. 4 und 5 ein Schaltrad für den Vorschubantrieb des Magazins in einer Stirnansicht gemäß Fig. 1 und einer Seitenansicht in Richtung des Pfeiles V der Fig. 4 (in gegenüber Fig. 1 vergrößertem Maßstab) ;

Fig. 6 ein auf einer Antriebswelle der Vorrichtung mittels einer Rutschkupplung gelagertes Zahnrad in einer der Fig. 2 entsprechenden Draufsicht (in gegenüber Fig. 2 vergrößertem Maßstab und mit axial geschnitten dargestellter Rutschkupplung) ;

Fig. 7 die Rutschkupplung gemäß Fig. 6 einem Querschnitt nach der Linie VII-VII der Fig. 6 ;

Fig. 8 ein gegenüber den Fig. 4 und 5 etwas abgewandeltes Schaltrad in einer der Fig. 5 entsprechenden Teilansicht.

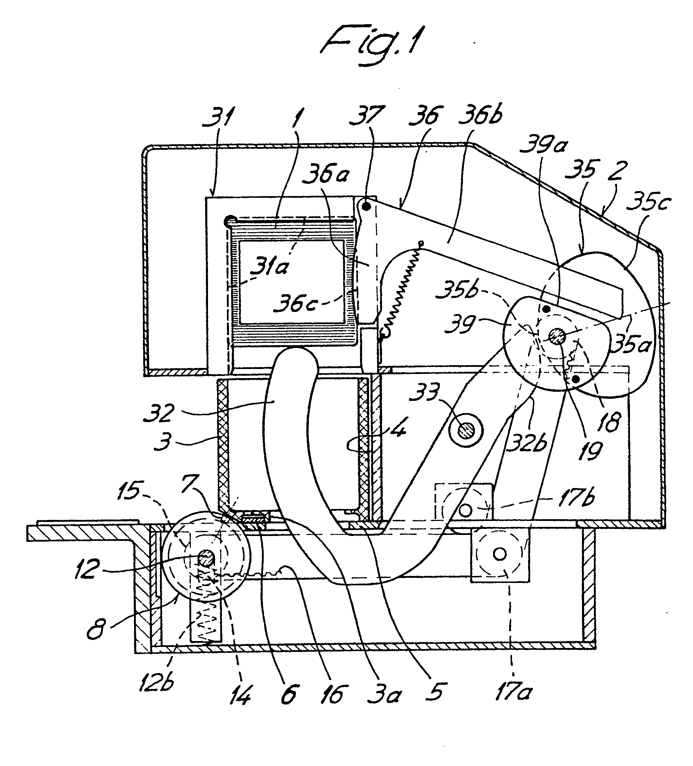

Der dargestellte Projektor für Diapositive 1 weist in seinem Gehäuse 2 einen in üblicher Weise zum Durchschieben eines Magazins 3 für Diapositive dienenden, das Gehäuse geradlienig durchsetzenden Magazinkanal 4 auf, der an seiner einen, gemäß Fig. 1 linken Seite offen ist. Auf der Bodenwand 5 des Magazinkanals 4 verläuft in dessen Längsrichtung eine Führungsschiene 6, entlang der das Magazin 3 während seines schrittweisen Vorschubes in üblicher Weise geführt wird.

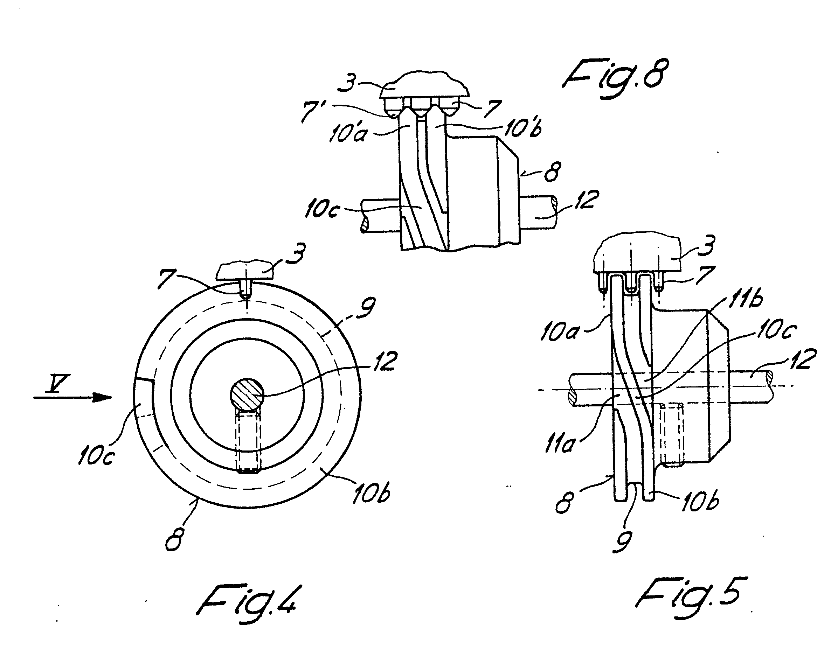

An seiner gemäß Fig. 1 links unten befindlichen Seitenkante ist das Magazin 3 zahnstangenförmig ausgebildet, wobei die in gleichmäßigen Abständen aufeinanderfolgenden Zähne 7 (vgl. auch Fig. 5) schräg nach außen unten ragen. An einer Stelle der Bewegungsbahn der Zähne 7 des durch den Projektor bewegten Magazins 3 ist im Gehäuse 2 um eine parallel zur Bewegungsbahn der Zähne 7 des Magazins 3 verlaufende Achse drehbar ein Schaltrad 8 gelagert, welches in einer entlang seinem äußeren Umfang verlaufenden Rinne 9 jeweils einen Zahn 7 des Magazins 3 aufnimmt. Wie aus Fig. 5 hervorgeht, sind die beiden, die Rinne 9 einschließenden Rippen 10a und 10b an einer Umfangsstelle nach außen durchbrochen, wobei von den vier die beiden Durchbrechungen 11a und 11b begrenzenden Seitenkanten der Rippen 10a und 10b zwei schräg gegenüberliegende durch ein die Rinne 9 überquerendes schräges Zwischenstück 10c miteinander verbunden sind. Auf diese Weise ergibt sich bei einer Drehung des Schaltrades 8 ein schrittweise fortlaufender Vorschub des Magazins 3, der durch jede vorübergehende Stillsetzung des Schaltrades 8 beliebig unterbrochen werden kann. Im übrigen ist das Schaltrad 8 auf einer dessen Drehachse bildenden Welle 12 festgelegt, die einerseits des Schaltrades 8 mit Abstand in einem Schwenklager 13 des Gehäuses 2 und anderseits des Schaltrades 8 in einem lotrechten Langloch 14 (vgl. Fig. 1) des Gehäuses 2 gelagert ist, welches sich an einer äußeren Seitenwand 2a des Gehäuses 2 befindet. Die mit ihrem dortigen freien Ende 12a durch die Seitenwand 2a nach außen ragende Welle 12 wird durch eine im Bereich des Langloches 14 unter ihr befindliche Druckfeder 12b nachgiebig in ihre am oberen Ende des Langloches 14 anliegende Normalstellung vorgespannt, in der sie parallel zur Bewegungsbahn des Magazins 3 verläuft und bei der das Schaltrad 8 bei eingelegtem Magazin 3 einen Zahn 7 in der aus den Fig. 1 und 3 bis 5 ersichtlichen Weise aufnimmt. Das Langloch 14 ist jedoch so lang ausgebildet, daß das Schaltrad 8 durch ein Herabschwenken der Welle 12 von Hand von seinem freien Ende 12a her außer Eingriff mit den Zähnen 7 gebracht und das Magazin 3 daraufhin im Magazinkanal 4 beliebig verschoben oder auch herausgezogen werden kann. Schließlich ist die Welle 12 in üblicher, nicht besonders dargestellter Weise, beispielsweise am Schwenklager 13 gegenüber einer axialen Verschiebung festgehalten.

Aus den Fig. 1 bis 3 ist weiterhin ersichtlich, daß auf der Welle 12 zwischen dem Schaltrad 8 und dem Langloch 14 ein Zahnrad 15 festgelegt ist, in das ein Zahnriemen 16 eingreift. Die beiden Trumen des Zahnriemens 16 unterqueren den Magazinkanal 4 und sind auf der dem Schaltrad 8 in bezug auf den Magazinkanal 4 gegenüberliegenden Seite des Gehäuses 2 über je eine Umlenkrolle 17a und 17b zu einem etwas oberhalb des Magazinkanals 4 befindlichen und um eine parallel zur Welle 12 verlaufende Achse drehbaren Zahnrad 18 geführt, so daß der Zahnriemen 16 gemeinsam mit den Zahnrädern 15 und 18 einen Zahnriementrieb bildet.

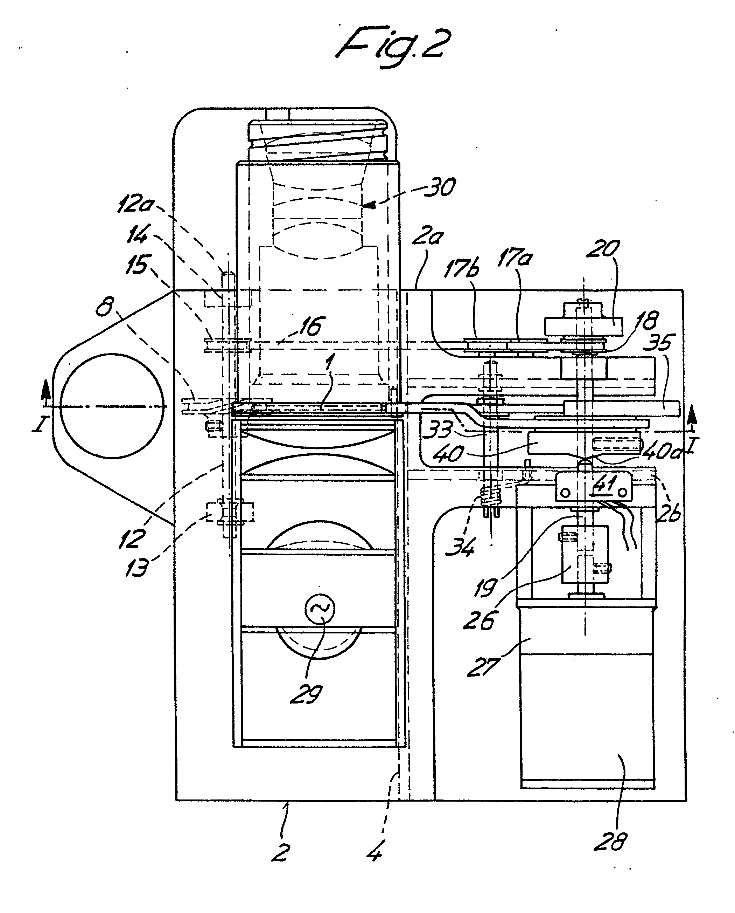

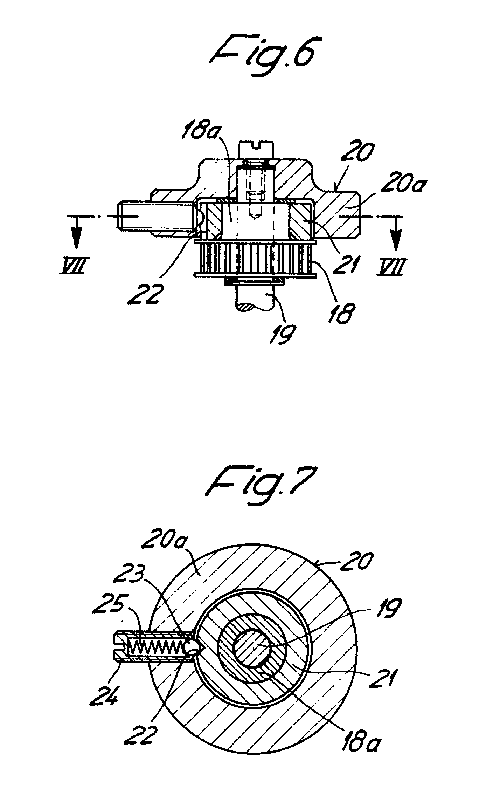

Wie aus den Fig. 2 und 6 bis 7 hervorgeht, ist das Zahnrad 18 auf einer zugleich zu seinem Antrieb dienenden Antriebswelle 19 drehbar über eine Rutschkupplung 20 gelagert, die ihrerseits auf der Antriebswelle 19 festgelegt ist. Die Kupplung zwischen dem Zahnrad 18 und einem Gehäusekörper 20a der Rutschkupplung 20 erfolgt über einen auf der Nabe 18a des Zahnrades 18 festgelegten Ring 21, der an einer Umfangsstelle eine Längsnute 22 aufweist. In die Längsnute 22 rastet normalerweise in der aus den Fig. 6 und 7 hervorgehenden Weise eine Rastkugel 23 ein, die in einer den Gehäusekörper 20a radial durchsetzenden Hohlschraube 24 gehalten und durch eine in derselben befindliche Druckfeder 25 einwärts nach der Längsnute 22 hin vorgespannt ist.

Die an der Rutschkupplung 20 endigende Antriebswelle 19 ist an ihrem anderen Ende über eine Kupplung 26 und ein Untersetzungsgetriebe 27 von einem Elektromotor 28 her antreibbar, der bei dem Ausführungsbeispiel als Reversier-Synchronmotor ausgebildet ist. Damit kann der Vorschub des Magazins 3 im Magazinkanal 4 von einem üblichen, den Elektromotor 28 im einen oder anderen Drehsinn einschaltenden (nicht dargestellten) Doppelschalter her über den Zahnriementrieb 15 bis 18 wahlweise vor- oder rückwärts erfolgen.

Wie insbesondere aus den Fig. 1 und 2 ersichtlich ist, verläuft der Strahlengang des Projektors von einer üblichen Lichtquelle 29 durch ein übliches Objektiv 30 oberhalb des Magazinkanals 4 parallel zu diesem. Infolgedessen muß das jeweils zu projizierende Diapositiv 1 zunächst aus dem Magazin 3 gemäß Fig. 1 in den Strahlengang des Projektors angehoben werden und muß dort in eine für alle Diapositive genau gleiche zentrierte Projektionsstellung gebracht werden. Gemäß Fig. 1 dient zu dieser Zentrierung vor allem ein Winkelstück 31, an welchem das in seiner Projektionsstellung befindliche Diapositiv 1 gemäß Fig. 1 einerseits und oben anliegt. Dabei weisen die dem Diapositiv 1 zugekehrten beiden Längskanten der beiden Schenkel des Winkelstückes 31 jeweils eine Keilprofilrinne 31a auf, so daß das in nachstehend noch näher beschriebener Weise gegen das Winkelstück 31 angedrückte Diapositiv 1 sicher fixiert und zentriert festliegt.

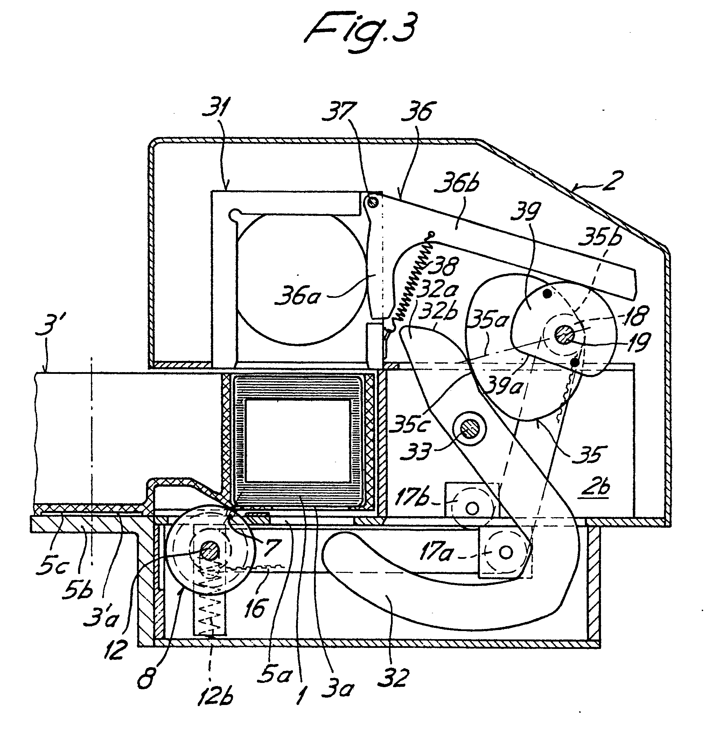

Zum Anheben des Diapositivs 1 in seine Projektionslage dient ein hakenförmiger Hubfinger 32, der im Gehäuse 2 um eine zwischen der Antriebswelle 19 und dem Magazinkanal 4 parallel zu diesen verlaufende Achse 33 schwenkbar gelagert ist. Dabei kann der Hubfinger 32 aus einer aus Fig. 3 ersichtlichen Ausgangsstellung, bei der er den Magazinkanal 4 freigibt, durch eine Öffnung 5a in der Bodenwand 5 des Magazinkanals 4 und durch eine zugeordnete Öffnung 3a im Magazin 3 hindurch bis in eine Hubstellung (vgl. Fig. 1) angehoben werden, bei der er das im zugeordneten Fach des Magazins 3 befindliche Diapositiv 1 in seine aus Fig. 1 ersichtliche Projektionsstellung anhebt.

Der Hubfinger 32 weist an einem ihn über die Achse 33 hinaus verlängernden Anschlagteil 32a eine ballige Anschlagfläche 32b auf und ist durch eine auf seiner Drehachse 33 gelagerte und einerseits abgestützte sowie anderseits an einer Zwischenwand 2b des Gehäuses 2 festgelegte Schenkelfeder 34 (vgl. Fig. 2) gemäß den Fig. 1 und 3 im Uhrzeigersinn vorgespannt, so daß er mit seiner Anschlagfläche 32b an einer auf der Antriebswelle 19 festgelegten Nockenscheibe 35 anschlägt. Gemäß den Fig. 1 und 3 ist die auf der Antriebswelle 19 exzentrisch festgelegte Nockenscheibe 35 symmetrisch zu einer ihre Lagerstelle aufnehmenden Querachse 35a ausgebildet und weist in ihrem der Antriebswelle 19 nächstgelegenen Umfangsbereich ein zur Drehachse konzentrisches Kreisbogenprofil 35b mit einem Segmentwinkel von etwa 10° und in ihrem demselben gegenüberliegenden Umfangsbereich ein ebenfalls zur Drehachse konzentrisches Kreisbogenprofil 35c mit einem Segmentwinkel von etwa 75° auf. Daraus ergibt sich, daß der Hubfinger 32 bei der in Fig. 1 dargestellten Stellung der Nockenscheibe 35 von der Schenkelfeder 34 her in seine Hubstellung geschwenkt wird, bei der er das Diapositiv 1 von unten her gegen den waagerechten Schenkel des Winkelstückes 31 andrückt. Zur Sicherstellung dieser Festlegung verläuft die Anschlagfläche 32b hierbei in einem kleinen Abstand von der Nockenscheibe 35, wird an derselben also nur dann anliegen, wenn beim Anheben des Hubfingers 32 im zugeordneten Fach des Magazins 3 kein Diapositiv 1 vorhanden war.

Wird die Antriebswelle 19 aus der in Fig. 1 dargestellten Stellung weitergedreht, dann nimmt der Hubfinger 32 seine in Fig. 3 dargestellte Ausgangsstellung über einen Drehwinkel der Antriebswelle 19 von etwa 75° ein, welchem Winkelbereich ein Eingriffsbereich des Zwischenstückes 10c mit den Zähnen 7 des Magazins 3 (vgl. Fig. 5) zugeordnet ist. Infolgedessen bleibt der Hubfinger 32 während eines Vorschubschrittes des Magazins 3 zuverlässig außerhalb des Magazinkanals 4.

Gemäß den Fig. 1 bis 3 ist an einem Teil des Gehäuses 2 vor dem freien Ende des waagerechten Schenkels des Winkelstückes 31 ein Winkelhebel 36 gelagert, dessen einer, von seiner Lagerstelle 37 aus nach unten ragender Hebelarm 36a über eine am anderen, etwa waagerecht verlaufenden Hebelarm 36b angreifende Zugfeder 38 nach dem Winkelstück 31 hin vorgespannt ist. Der andere Hebelarm 36b wirkt mit einer weiteren, auf der Antriebswelle 19 festgelegten Nockenscheibe 39 zusammen. Wie ersichtlich, weist die Nockenscheibe 39 über den überwiegenden Teil ihres Umfangsbereiches ein zur Antriebswelle 19 konzentrisches Kreisprofil auf, über welches der Winkelhebel 36 derart angehoben wird, daß sein Hebelarm 36a den unterhalb des Winkelprofils 31 befindlichen Raum freigibt. Infolgedessen wird über diesen überwiegenden Winkelbereich ein zuvor etwa in seiner Projektionsstellung befindlich gewesenes Diapositiv 1 in das Magazin 3 absinken, solange es nicht durch den Hubfinger 32 angehoben wird. Im restlichen Umfangsbereich weist die Nockenscheibe 39 aber eine Abflachung 39a auf, die gemäß Fig. 1 dem Hebelarm 36b des Winkelhebels 36 gerade dann zugeordnet ist, wenn der Hubfinger 32 sich in seiner Hubstellung befindet. Infolgedessen wird das in seiner Projektionsstellung befindliche Diapositiv 1 nicht nur vom Hubfinger 32 nach oben, sondern auch vom Hebelarm 36a des Winkelhebels 36 aus (gemäß Fig. 1 nach links) gegen den lotrechten Schenkel des Winkelstückes 31 angedrückt. Wie die beiden Schenkel des Winkelstückes 31 ist auch der Hebelarm 36a an seiner dem in seiner Projektionsstellung befindlichen Diapositiv 1 zugekehrten Seitenkante mit einer Keilprofilrinne 36c versehen, so daß das in seiner Projektionsstellung befindliche Diapositiv 1 vom Winkelhebel 36 her zusätzlich zentriert wird.

Wenn es auch möglich ist, den Transport von Diapositiven durch den Projektor kontinuierlich fortlaufend zu gestalten, indem die Antriebswelle 19 vom Elektromotor 28 her kontinuierlich rotierend angetrieben wird, so ist doch in üblicher Weise auch bei dem hier beschriebenen Projektor vorgesehen, daß der vom vorgenanten Doppelschalter her eingeleitete Bildwechsel nur bis zur Fixierung des nächsten Diapositivs 1 in seiner Projektionsstellung erfolgt. Gemäß Fig. 2 dient zur Unterbrechung einer Weiterdrehung der Antriebswelle 19 eine weitere, auf der Antriebswelle 19 festgelegte Nockenscheibe 40, die an ihrer einen Stirnfläche an einer exzentrischen Stelle eine Nockenerhebung 40a aufweist, mit der ein Schalter 41 jeweils dann zusammenwirkt, wenn sich der Hubfinger 32 in seiner in Fig. 1 dargestellten Hubstellung befindet. Erst durch eine erneute Einschaltung des Elektromotors 28 vom genannten Doppelschalter her wird dann der nächste Bildwechsel eingeleitet. Da diese Betriebsweise üblich ist, erübrigt sich hier eine nähere Erläuterung der zugeordneten Schaltungseinzelheiten. Ebenso üblich ist eine weitere Schaltungstechnik, mittels der auf Betätigung eines weiteren (nicht dargestellten) Schaltknopfes hin der Hubfinger 32 in seiner in Fig. 3 dargestellten Ausgangsstellung angehalten werden kann, damit das Magazin 3 nach einem bereits vorstehend beschriebenen Auskuppeln des Schaltrades 8 aus den Zähnen 7 des Magazins 3 beliebig verschoben oder ausgetauscht werden kann.

Ein Vergleich der Fig. 1 und 3 läßt erkennen, daß in Fig. 3 ein von dem in Fig. 1 dargestellten üblichen geradlinigen Magazin 3 unterschiedliches Rundmagazin 3' dargestellt ist. Ein solches Rundmagazin 3' kann deshalb Verwendung finden, weil der Magazinkanal 4 einerseits bis aus dem Gehäuse 2 heraus offen ist und die Bodenwand 5 des Magazinkanals 4 auf dieser Seite eine Erweiterung 5b aufweist, die bis unter den Mittelbereich des Rundmagazins 3' reicht. Dabei trägt die Erweiterung 5b einen axial zum Rundmagazin 3' verlaufenden oberen Zapfenansatz 5c, auf dem das Rundmagazin 3' mit einer entsprechenden kreisförmigen Ausnehmung 3'a axial zentriert geführt ist. Da auch das Rundmagazin 3' Zähne 7 aufweist, die in diesem Falle entlang einem konzentrisch zur Drehachse des Rundmagazins 3' verlaufenden Kreis angeordnet sind, kann auch das Rundmagazin 3' vom Schaltrad 8 her schrittweise rotierend weiterbewegt werden.

Auf die in den Fig. 6 und 7 dargestellte Rutschkupplung 20 kann auch verzichtet werden, wenn das Schaltrad 8 gemäß Fig. 8 Rippen 10'a und 10'b mit einem entlang deren Umfangsrändern keilförmig verjüngten und entlang den Außenkanten abgerundeten Profil und das Magazin 3 Zähne 7 mit derart angepaßten Konusspitzen 7' aufweist, daß die Zähne 7 an den Rippen 10'a und 10'b des Schaltrades 8 lediglich im Bereich ihrer Konusspitzen 7' anliegen. Sollte sich bei einer solchen, in Fig. 8 dargestellten Konstruktion bei kontinuierlich angetriebenem Schaltrad 8 am Magazin 3 eine Vorschubhemmung ergeben, dann kann das weiterrotierende Schaltrad 8 im Wirkungsbereich seines Zwischenstückes 10c gegenüber dem zugeordneten Zahn 7 einfach entgegen der Kraft der Druckfeder 12b nachgiebig nach unten ausweichen.

Für den Antrieb des Schaltrades 8 könnte statt des beschriebenen Zahnriementriebes 15 bis 18 auch ein entsprechender Kettentrieb od. dgl. vorgesehen sein.

**Ansprüche**

1. Vorrichtung an einem Projektor für den selbsttätigen schrittweisen Vorschub eines Magazins (3) für Diapositive (1) und für den selbsttätigen Hub des jeweils zu projizierenden Diapositivs aus dem Magazin in eine im Strahlengang des Projektors befindliche Projektionsanlage (29, 30) und wieder zurück in das Magazin jeweils zwischen zwei aufeinanderfolgenden Vorschubschritten des Magazins, die einen von einem Schaltknopf her einschaltbaren Elektromotor (28), eine von diesem über ein Untersetzungsgetriebe (27) je Arbeitszyklus um eine Umdrehung antreibbare Antriebswelle (19) und einen von dieser her betätigbaren, einen Nockentrieb (35) aufweisenden Antriebsmechanismus für den Magazintransport und den Diapositivhub aufweist, zu dem außerdem ein in eine untere Verzahnung des Magazins eingreifendes Vorschubrad (8) und ein innerhalb der Hubebene des Diapositivs um eine seitlich des Magazinkanals (4) befindliche Lagerstelle (33) hin- und herschwenkbarer und hierdurch das jeweils in der Hubebene befindliche Diapositiv von unten her anhebender und zum Bildwechsel wieder nach unten freigebender hakenförmiger Hubfinger (32) gehört, dadurch gekennzeichnet, daß der Antriebsmechanismus für den Magazintransport einen von der Antriebswelle (19) zum Vorschubrad führenden Zahnriementrieb (15 bis 18) aufweist und das Vorschubrad als ein im Gehäuse (2) des Projektors unter dem Magazinkanal (4) um eine in Vorschubrichtung des Magazins (3 bzw. 3') verlaufende Welle (12) drehbares Schaltrad (8) mit zwei auf seiner Mantelfläche im Abstand der Zahnteilung der Magazinverzahnung (7) parallel umlaufenden und an je einer Umfangsstelle unterbrochenen, jedoch über ein dortiges schräges Zwischenstück (10c) miteinander verbundenen Rippen (10a und 10b) ausgebildet ist, und daß der Nockentrieb (Nockenscheibe 35) Bestandteil eines Rückholmechanismus für den nachgiebig federnd nach seiner das Diapositiv (1) anhebenden Hubstellung hin vorgespannten Hubfinger (32) ist, der mit einem Anschlagteil (32a) an der Nockenscheibe (35) des Nockentriebes anliegt.

2. Vorrichtung nach Anspruch 1, dadurch gekennzeichnet, daß die das Schaltrad (8) tragende Welle (12) einerseits des Schaltrades (8) mit Abstand in einem Schwenklager (13) des Projektorgehäuses (2) gelagert und anderseits des Schaltrades (8) in einem von der Lagerstelle aus nach unten verlaufenden Langloch (14) des Gehäuses (2) geführt und darin entgegen der Kraft einer Druckfeder (12b) nach unten bis zum Ausrasten des Schaltrades (8) aus dem Eingriff mit einem Magazin (3 bzw. 3') schwenkbar ist.

3. Vorrichtung nach den Ansprüchen 1 und 2, dadurch gekennzeichnet, daß die Rippen (10'a une 10'b) des Schaltrades (8) entlang ihren Umfangsrändern ein keilförmig verjüngtes und entlang den Außenkanten abgerundetes Profil und die Zähne (7) des Magazins (3 bzw. 3') in der Eingriffsstellung an den schrägen Flanken der Rippen (10'a und 10'b) anliegende Konusspitzen (7') aufweisen.

4. Vorrichtung nach Anspruch 2 oder 3, dadurch gekennzeichnet, daß das die eine lagerstelle bildende Langloch (14) an einer Außenwand (2a) des Gehäuses (2) angeordnet ist und die Welle (12) das Langloch (14) mit ihrem einen freien Ende (12a) nach außen durchsetzt.

5. Vorrichtung nach einem der vorhergehenden Ansprüche, dadurch gekennzeichnet, daß ein in seiner Winkelstellung der Winkelstellung des Schaltrades (8) zugeordnetes Zahnrad (18) des Zahnriementriebes (15 bis 18) auf der Antriebswelle (19) über eine aus ihm für jeweils eine Umdrehung nachgiebig ausrastbare Rutschkupplung (20) drehbar gelagert ist.

6. Vorrichtung nach einem der vorhergehenden Ansprüche, dadurch gekennzeichnet, daß die Diapositive (1) in ihrer Projektionslage jeweils oben und einerseits an einem die zugeordneten Kanten in je einer Keilprofilrinne (31a) zentrierenden Winkelstück (31) abgestützt sind und entlang der vom Winkelstück (31) freien Seitenkante des Diapositivs (1) ein durch eine Federkraft (Zugfeder 38) nachgiebig gegen das Diapositiv (1) vorgespannter erster Hebelarm (36a) eines Winkelhebels (36) verläuft, dessen zweiter Hebelarm (36b) von einer auf der Antriebswelle (19) festgelegten zweiten Nockenscheibe (39) her im Sinne einer Abschwenkung des ersten Hebelarms (36a) vom Diapositiv (1) während aller vor und nach der jeweiligen Projektionsphase liegenden Phasen eines Arbeitszyklus der Vorrichtung steuerbar ist.

7. Vorrichtung nach Anspruch 6, dadurch gekennzeichnet, daß auch der erste Hebelarm (36a) des Winkelhebels (36) an seiner dem zu fixierenden Diapositiv (1) zu gelegenen Seite eine Keilprofilrinne (36c) aufweist.

8. Vorrichtung nach Anspruch 6 oder 7, dadurch gekennzeichnet, daß die Antriebswelle (19), der Hubfinger (32) und der Winkelhebel (36) alle auf einer Seite des Magazinkanals (4) angeordnet sind.

9. Vorrichtung nach einem der vorhergehenden Ansprüche, dadurch gekennzeichnet, daß der Anschlagteil (32a) des Hubfingers (32) ballig ausgebildet ist und die zugeordnete Nockenscheibe (35) ein den Hubfinger (32) in seiner Hubstellung haltendes Kreisbogenprofil (35b) mit einem Segmentwinkel von etwa 10° und ein den Hubfinger (32) in seiner Ausgangsstellung belassendes Kreisbogenprofil (35c) mit einem Segmentwinkel von etwa 75° aufweist.

10. Vorrichtung nach einem der vorhergehenden Ansprüche, dadurch gekennzeichnet, daß der Elektromotor (28) als von einem entsprechenden Doppelschalter her einschaltbarer Reversier-Synchronmotor ausgebildet ist.

11. Vorrichtung nach einem der vorhergehenden Ansprüche, dadurch gekennzeichnet, daß der geradlinige Magazinkanal (4) an seiner einen Seite offen ist und das Gehäuse (2) an dieser Seite eine Lagerstelle (Zapfenansatz 5c) für ein wahlweise verwendbares Rundmagazin (3') aufweist.

## Claims

1. Apparatus on a projector for the automatic stepwise feed movement of a magazine (3) for transparencies (1) and for the automatic lift movement of the respective transparency to be projected, out of the magazine into a projection means (29, 30) which is disposed in the path of the projector beam, and back again into the magazine, between each two successive feed steps of the magazine, comprising an electric motor (28) which is capable of being switched on from a switch button, a drive shaft (19) which can be driven through one revolution in each operating cycle by the electric motor, by way of a step-down transmission means (27), and a drive mechanism for magazine transport and transparency lift movement, which drive mechanism is actuable by the drive shaft and has a cam drive means (35), the drive mechanism also including a feed whell (8) which engages into a lower tooth assembly of the magazine and a hook-shaped lifting finger (32) which can be pivoted back and forth within the plane of lift movement of the transparency, about a mounting means (33) which is disposed laterally of the magazine passage (4), whereby the respective transparency in the plane of lift movement thereof is lifted from below and released downwardly again for changing the image, characterised in that the drive mechanism for magazine transport has a toothed belt drive (15 to 18) which leads from the drive shaft (19) to the feed wheel, and the feed wheel is in the form of a stepping wheel (8) which is rotatable in the housing (2) of the projector below the magazine passage (4), about a shaft (12) which extends in the feed direction of the magazine (3 and 3'), the stepping wheel (8) having two ribs (10a and 10b) which extend around the peripheral surface of the stepping wheel parallel to each other at the spacing of the tooth pitch of the magazine tooth assembly (7) and which are each interrupted at a respective peripheral point but which are connected together by way of an inclined intermediate portion (10c) at that point, and that the cam drive means (cam disc 35) is a component of a return mechanism for the lifting finger (32) which is yieldably resiliently biassed towards its lift position of lifting the transparency (1) and which bears with its abutment portion (32a) against the cam disc (35) of the cam drive means.

2. Apparatus according to claim 1 characterised in that the shaft (12) which carries the stepping wheel (8) is mounted on one side of the wheel (8) at a spacing in a pivot mounting (13) of the projector housing (2) and on the other side of the wheel (8) in a slot (14) in the housing (2), which extends downwardly from the mounting position, and the shaft (12) is pivotal therein against the force of a compression spring (12b) downwardly until the stepping wheel (8) comes out of engagement with a magazine (3 and 3').

3. Apparatus according to claims 1 and 2 characterised in that the ribs (10'a) and 10'b) of the stepping wheel (8) have, along their peripheral edges, a wedge-shaped tapered configuration which is rounded off along the outside edges, and the teeth (7) of the magazine (3 and 3') have conical tips (7') which bear against the inclined side surfaces of the ribs (10'a and 10'b), in the condition of engagement.

4. Apparatus according to claim 2 or claim 3 characterised in that the slot (14) forming the one mounting position is disposed in an outside wall (2a) of the housing (2), and the one free end (12a) of the shaft (12) passes outwardly through the slot (14).

5. Apparatus according to one of the preceding claims characterised in that a toothed wheel (18) of the toothed belt drive (15 to 18), which toothed wheel is associated in respect of its angular position with the angular position of the stepping wheel (8), is mounted rotatably on the drive shaft (19), by way of a slipping clutch (20) which is resiliently disengageable therefrom for a respective revolution.

6. Apparatus according to one of the preceding claims characterised in that the transparencies (1) are each supported in their projection position at the top and at one side against an angle member (31) which centres the associated edges in a respective V-configuration groove (31a), and along the side edge of the transparency (1), which is free from the angle member (31), there extends a first lever arm (36a) of an angle lever (36), said lever arm being resiliently biassed against the transparency (1) by a spring force (tension spring 38), the second lever arm (36b) of said angle lever (36) being actuable by a second cam disc (39) fixed on the drive shaft (19), for producing a pivotal movement of the first lever arm (36a) away from the transparency (1) during all phases of an operating cycle of the apparatus, which occur before and after the respective projection phase.

7. Apparatus according to claim 6 characterised in that the first lever arm (36a) of the angle lever (36) also has a V-configuration groove (36c) at the side thereof which is towards the transparency (1) to be fixed.

8. Apparatus according to claim 6 or claim 7 characterised in that the drive shaft (19), the lifting finger (32) and the angle lever (36) are all arranged on one side of the magazine passage (4).

9. Apparatus according to one of the preceding claims characterised in that the abutment portion (32a) of the lifting finger (32) is of a spherical configuration and the associated cam disc (35) has a portion (35b) of arcuate configuration, with a segment angle of about 10°, for holding the lifting finger (32) in its lifting position, and a portion (35c) of arcuate configuration, with a segment angle of about 75°, for leaving the lifting finger (32) in its initial position.

10. Apparatus according to one of the preceding claims characterised in that the electric motor (28) is in the form of a reversible synchronous motor which can be switched on from a corresponding double switch.

11. Apparatus according to one of the preceding claims characterised in that the straight magazine passage (4) is open at one side thereof and at said side the housing (2) has a mounting means (journal projection 5c) for a round magazine (3') which can be selectively used.

**Revendications**

1. Dispositif sur un projecteur pour l'avance automatique pas à pas d'un magasin (3) pour diapositives (1) et pour le soulèvement automatique de la diapositive devant à chaque fois être projetée hors du magasin et dans une position de projection (29, 30) se trouvant sur le trajet du faisceau du projecteur, et à nouveau de retour dans le magasin à chaque fois entre deux pas successifs d'avance du magasin, qui comporte un moteur électrique (28) pouvant être mis en service à partir d'un bouton de commande, un arbre d'entraînement (19) pouvant être entraîné par celui-ci, d'un tour pour chaque cycle de travail, par l'intermédiaire d'une transmission de démultiplication (27), et un mécanisme d'entraînement pour le transport du magasin et le soulèvement d'une diapositive, pouvant être actionné à partir de cet arbre et comportant un entraînement à came (35) et auquel appartiennent en outre une roue d'avance (8) venant en prise dans une denture inférieure du magasin, et un doigt de levée (32) en forme de crochet pouvant pivoter en va-et-vient à l'intérieur du plan de levée de la diapositive autour d'un point d'appui (33) situé sur le côté du conduit de magasin (4) et située dans le plan de levée, et la libérant à nouveau vers le bas pour le changement d'image, caractérisé en ce que le mécanisme d'entraînement pour le transport du magasin comporte un entraînement à courroie dentée (15 à 18) allant de l'arbre d'entraînement (19) à la roue d'avance, et la roue d'avance est réalisée sous la forme d'une roue de commande (8) pouvant pivoter dans le boîtier (2) du projecteur au-dessous du conduit de magasin (4) autour d'un arbre (12) s'étendant suivant la direction d'avance du magasin (3 ou 3') et munie de deux nervures (10a et 10b) s'étendant parallèlement sur sa surface enveloppe à la distance d'un pas des dents de la denture (7) du magasin et interrompues chacune en un emplacement périphérique, mais reliées entre elles au moyen d'une pièce intermédiaire (10c) oblique située en cet endroit, et en ce que l'entraînement à came (disque à came 35) fait partie constitutive d'un mécanisme de rappel pour le doigt de levée (32), soumis à une précontrainte et faisant élastiquement ressort en direction de sa position de relèvement soulevant la diapositive (1) et qui est appliquée par une partie de butée (32a) sur le disque à came (35) de l'entraînement à came.

2. Dispositif selon la revendication 1, caractérisé en ce que l'arbre (12) portant la roue de commande (8) est, d'un côté de la roue de commande (8), monté à distance dans un palier pivotant (13) du boîtier (2) du projecteur et est, de l'autre côté de la roue de commande (8), guidé dans une lumière allongée (14) du boîtier (2), s'étendant vers le bas à partir du point d'appui, et peut y être basculé à l'encontre de la force d'un ressort de pression (12b), vers le bas jusqu'au désenclenchement de la roue de commande (8) hors de prise d'avec un magasin (3 ou 3').

3. Dispositif selon l'une quelconque des revendications 1 et 2, caractérisé en ce que les nervures (10'a et 10'b) de la roue de comnande (8) comportent le long de leurs bords périphériques un profil se rétrécissant en forme de coin et arrondi le long des arêtes extérieures, et les dents (7) du magasin (3 ou 3') possèdent des pointes coniques (7') s'appuyant dans la position d'engrènement sur les flancs obliques des nervures (10'a et 10'b).

4. Dispositif selon l'une quelconque des revendications 2 et 3, caractérisé en ce que la lumière allongée (14) constituant un point d'appui est disposée sur une paroi extérieure (2a) du boîtier (2) et l'arbre (12) traverse vers l'extérieur la lumière allongée (14), par l'une de ses extrémités libres (12a).

5. Dispositif selon l'une quelconque des revendications 1 à 4, caractérisé en ce qu'un pignon (18), de l'entraînement à courroie dentée (15 à 18), associé dans sa position angulaire à la position angulaire de la roue de commande (8) est monté de façon à pouvoir tourner sur l'arbre d'entraînement (19) par l'intermédiaire d'un accouplement à friction (20) pouvant être désenclenché élastiquement à chaque fois d'une rotation.

6. Dispositif selon l'une quelconque des revendications 1 à 5, caractérisé en ce que, dans leur position de projection, les diapositives (1) s'appuient chacune en haut et d'un côté sur une pièce coudée (31) centrant les arêtes associées dans, pour chacune, une rainure profilée en coin (31a), et le long de l'arête latérale de la diapositive (1) dégagée de la pièce coudée (31) s'étend un premier bras de levier (36a), placé sous précontrainte élastique contre la diapositive (1) par l'intermédiaire d'une force de ressort (ressort de traction 38), d'un levier coudé (36) dont le second bras de levier (36b) peut être commandé à partir d'un second disque à came (39) fixé sur l'arbre d'entraînement (19) dans le sens d'un écartement par basculement du premier bras de levier (36a) à partir de la diapositive (1) pendant toutes les phases d'un cycle de travail du dispositif, situées avant et après la phase considérée de projection.

7. Dispositif selon la revendication 6, caractérisé en ce que, également, le premier bras de levier (36a) du levier coudé (36) comporte sur sa face, devant être tournée vers la diapositive (1) à fixer, une rainure profilée en coin (36c).

8. Dispositif selon l'une quelconque des revendications 6 ou 7, caractérisé en ce que l'arbre d'entraînement (19), le doigt de levée (32) et le levier coudé (36) sont tous disposés sur un côté du conduit (4) de magasin.

9. Dispositif selon l'une quelconque des revendications 1 à 8, caractérisé en ce que la partie de butée (32a) du doigt de levée (32) est réalisée bombée et le disque à came associé (35) possède un profil en arc de cercle (35b) maintenant le doigt de levée (32) dans sa position de relèvement, avec un angle de segment d'environ 10°, et un profil en arc de cercle (35c) laissant le doigt de levée (32) dans sa position initiale, avec un angle de segment d'environ 75°

10. Dispositif selon l'une quelconque des revendications 1 à 9, caractérisé en ce que le moteur électrique (28) est constitué par un moteur synchrone réversible pouvant être mis en service à partir d'un commutateur double correspondant.

11. Dispositif selon l'une quelconque des revendications 1 à 10, caractérisé en ce que le conduit rectiligne (4) du magasin est ouvert sur un de ses côtés et le boîtier (2) comporte, sur ce côté, un point d'appui (saillie en forme de téton 5c) pour un magasin circulaire (3') utilisable au choix.

1/5

# Fig.1

Fig.2

# Fig.3

Fig.8

Fig.4

Fig.5

0 005 236

5/5 **Fig.6**

**Fig.7**